# EUROPEAN PATENT APPLICATION

(11) **EP 4 407 750 A2**
(43) Date of publication of application: **31.07.2024**
(21) Application number: 23208278.4
(22) Date of filing: 07.11.2023
(51) Int. Cl.: H01M 10/613, H01M 10/647, H01M 10/6555, H01M 10/658, H01M 50/209, H01M 50/224, H01M 50/367, H01M 10/625

(54) **BATTERY PACK**

(30) Priority: 07.11.2022 US 202263423436 P; 21.07.2023 KR 20230095338
(71) Applicant: Samsung SDI Co., Ltd., Yongin-si, Gyeonggi-do 17084 (KR)
(72) Inventor: KIM, Dong Hyeong, 17084 Yongin-si (KR); KIM, Myung Chul, 17084 Yongin-si (KR); JEON, Du Seong, 17084 Yongin-si (KR); KIM, Jeong Ho, 17084 Yongin-si (KR)
(74) Representative: Marks & Clerk LLP

(57) **Abstract**

Embodiments of the present disclosure relate to a battery pack capable of reducing heat propagation to neighboring cells when an event occurs in a specific battery cell. In an example embodiment, a battery pack includes: a plurality of battery cells; a first heat shielding member arranged to cover a side of a battery cell where a vent is formed; and a rigid member coupled to an outer surface of the first heat shielding member, and the rigid member includes a metal plate and an insulating member covering the metal plate.

## Description

### BACKGROUND

### 1. Field

Aspects of embodiments of the present disclosure relate to a battery pack.

### 2. Description of the Related Art

Unlike a primary battery that cannot be charged, a secondary battery is a battery that can be charged and discharged. Low-capacity secondary batteries packaged in the form of a pack including a single battery cell are widely employed in portable small-sized electronic devices, such as cellular phones or camcorders. In addition, large-capacity secondary batteries packaged in forms of battery packs including, for example, tens of battery cells connected to one another are widely used for driving motors of hybrid vehicles or electric vehicles.

A secondary battery may be constructed by incorporating an electrode assembly and an electrolyte in a case with a separator interposed between a positive electrode plate and a negative electrode plate, and installing a cap plate to the case. Here, some representative examples of electrode assemblies include a wound type or a stack type. The electrode assembly may have an electrode tab protruding upwardly or laterally, and a current collector plate may be connected to the electrode tab.

These secondary batteries have recently been applied to high-output products, such as electric vehicles and ESS systems. In addition, to produce the output required for a product, secondary batteries can be applied to the product in the form of a battery pack consisting of a plurality of battery cells.

The above information disclosed in this Background section is provided for enhancement of understanding of the background of the disclosure and, therefore, it may contain information that does not constitute prior art.

### SUMMARY

According to an aspect of embodiments of the present disclosure, a battery pack capable of reducing heat propagation to neighboring cells when an event occurs in a specific battery cell is provided.

According to one or more embodiments of the present disclosure, a battery pack includes: a plurality of battery cells; a first heat shielding member arranged to cover a side of a battery cell where a vent is formed; and a rigid member coupled to an outer surface of the first heat shielding member, wherein the rigid member includes a metal plate and an insulating member covering the metal plate.

In one or more embodiments, the rigid member may include at least one of steel, stainless steel, and aluminium.

In one or more embodiments, the first heat shielding member may include mica or aerogel.

In one or more embodiments, the insulating member may be integrally formed to surround at least one surface of the rigid member.

In one or more embodiments, the rigid member may include a central step including protrusions protruding on a side opposite to a side facing the battery cell.

In one or more embodiments, the central step may be formed in two rows and extend along a direction in which the battery cells are arranged.

In one or more embodiments, the central step may be formed along a protrusion shape of the metal plate.

In one or more embodiments, the rigid member may include an edge step including protrusions protruding on a side opposite to a side facing the battery cell with respect to both edge regions on the basis of a width of the battery cell.

In one or more embodiments, the edge step may have a same height as a central step formed at a center of the rigid member.

In one or more embodiments, the rigid member may include a central step formed on both sides of the vent of the battery cell, and an edge step formed on both edges on the basis of a width of the battery cell, and the battery pack may further include a second heat shielding member in an area between the central step and the edge step.

In one or more embodiments, the second heat shielding member may include mica or aerogel.

At least some of the above and other features of the invention are set out in the claims.

### BRIEF DESCRIPTION OF DRAWINGS

FIG. 1 is a perspective view of a battery pack according to an embodiment of the present disclosure.
FIGS. 2 and 3 are exploded perspective views of a battery pack according to one or more embodiments of the present disclosure.
FIG. 4 is a perspective view showing a state in which a rigid member and a heat shielding member of a battery pack according to an embodiment of the present disclosure are coupled.
FIG. 5 is a cross-sectional view of a battery pack according to an embodiment of the present disclosure.
FIG. 6 is a graph showing a degree of heat propagation to neighboring cells when an event occurs in a battery pack according to an embodiment of the present disclosure.

### DETAILED DESCRIPTION

Herein, some embodiments of the present invention will be described in further detail with reference to the accompanying drawings.

Some embodiments of the present disclosure are provided to more fully describe the present disclosure to those skilled in the art; however, the following embodiments may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections should not be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present invention.

Spatially relative terms, such as "beneath," "below," "lower," "above," "upper," and the like, may be used herein for ease of description to describe one element or feature's relationship to another element(s) or feature(s), referring to the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" may encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

Herein, the configuration of a battery pack according to an embodiment of the present disclosure will be described.

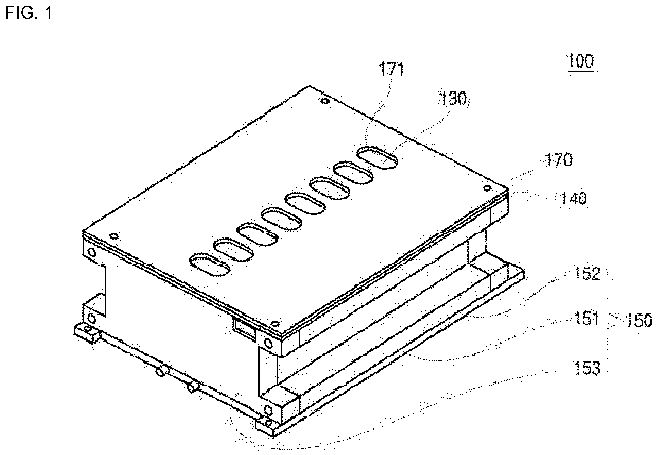

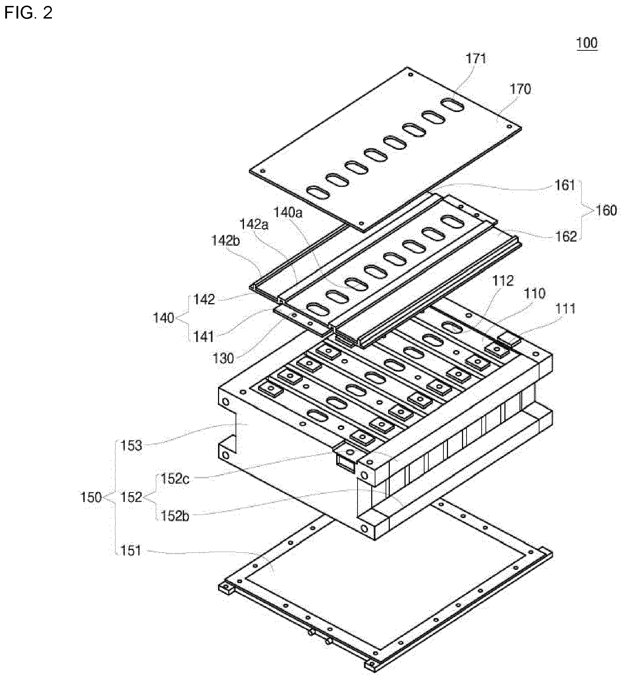

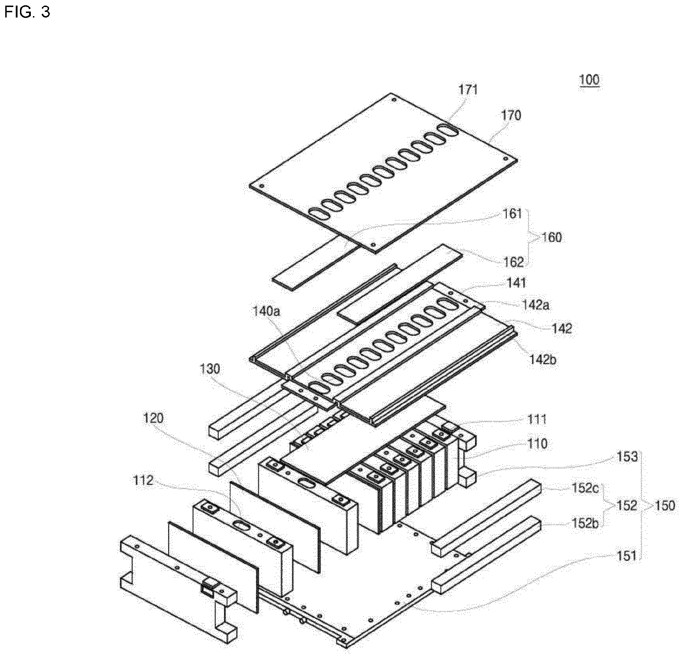

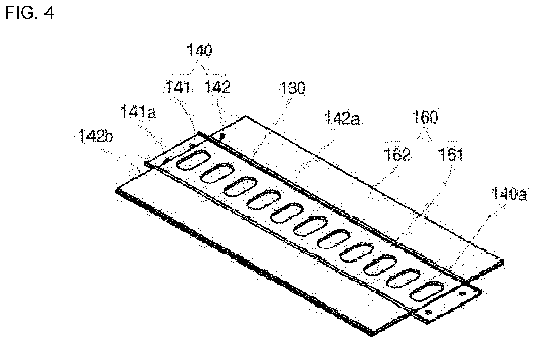

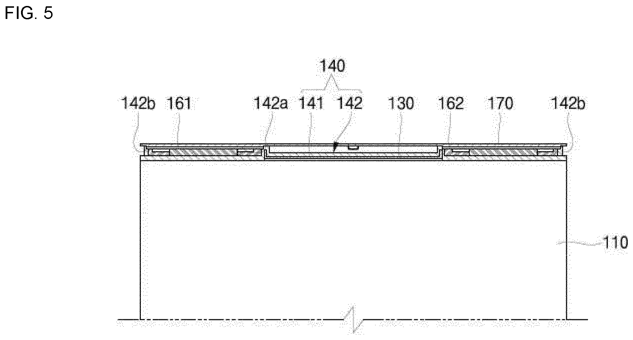

FIG. 1 is a perspective view of a battery pack according to an embodiment of the present disclosure. FIGS. 2 and 3 are exploded perspective views of a battery pack according to one or more embodiments of the present disclosure. FIG. 4 is a perspective view showing a state in which a rigid member and a heat shielding member of a battery pack according to an embodiment of the present disclosure are coupled. FIG. 5 is a cross-sectional view of a battery pack according to an embodiment of the present disclosure.

Referring to FIGS. 1 to 5, a battery pack 100 according to an embodiment of the present disclosure may include a plurality of battery cells 110, a spacer 120 located between the battery cells 110, a first heat shielding member 130 formed on an upper surface of the battery cells 110, a rigid member 140 formed on an upper surface of the first heat shielding member 130, a receiving cover 150 arranged around (e.g., to surround) and combining lower and side portions of the battery cell 110, a second heat shielding member 160 formed on an upper surface of the rigid member 140, and an upper cover 170 coupled to an upper portion of the receiving cover 150.

Each of the battery cells 110 may include an electrode assembly. The electrode assembly is formed by stacking or winding a laminate of a first electrode plate, a separator, and a second electrode plate, which are shaped of a thin plate or film. In an embodiment, the first electrode plate may operate as a negative electrode, and the second electrode plate may operate as a positive electrode.

The first electrode plate is formed by applying a first electrode active material, such as graphite or carbon, to a first electrode current collector formed of a metal foil, such as copper or nickel, and includes a first electrode uncoated portion that is a region to which the first electrode active material is not applied. The first electrode uncoated portion provides a path for current flow between the first electrode plate and the outside.

The second electrode plate is formed by applying a second electrode active material, such as a transition metal oxide, to a second electrode current collector formed of a metal foil, such as aluminium, and includes a second electrode uncoated portion that is a region to which the second electrode active material is not applied.

The separator is located between the first and second electrode plates and prevents or substantially prevents short circuits and enables the movement of lithium ions. In an embodiment, the separator may be made of polyethylene, polypropylene, or a composite film of polyethylene and polypropylene.

In addition, the electrode assembly may be stored in a case together with an electrolyte. In an embodiment, the electrolyte may include a lithium salt, such as LiPF₆ or LiBF₄, dissolved in an organic solvent, such as ethylene carbonate (EC), propylene carbonate (PC), diethyl carbonate (DEC), ethyl methyl carbonate (EMC), or dimethyl carbonate (DMC).

In an embodiment, the case may be sealed through a cap plate or a side plate. FIG. 2 shows an example in which the case is sealed by a side plate, and electrode terminals 111 coupled to the first and second electrode plates are formed on both sides of the side plate. These electrode terminals 111 may be formed to protrude from both sides of the case.

For example, the battery cell 110 may have a vent formed on the upper surface thereof. In an embodiment, the vent is formed to be thinner than other areas, and, thus, when an internal pressure of the battery cell 110 is higher than a reference pressure, the vent may be opened earlier than other areas. Accordingly, the vent may induce an internal gas of the battery cell 110 to be discharged to the outside in advance at a pressure higher than the reference pressure, thereby preventing or substantially preventing accidents, such as explosions, from occurring.

The spacer 120 may be disposed between the battery cells 110. The spacer 120 allows neighboring battery cells 110 to be electrically independent from each other and may block heat from the battery cells 110 from propagating to neighboring battery cells 110. The spacer 120 may be an insulating sheet, and may be made of, for example, ceramic paper.

The first heat shielding member 130 may be formed on the upper surface of the battery cell 110. The first heat shielding member 130 may be formed to cover a vent 112, with respect to the upper surface of the battery cell 110, where the vent 112 is formed. When the vent 112 is opened in a specific cell among the battery cells 110, a high-temperature discharge material may be discharged from the inside of the battery cell 110. If this discharge material scatters and flies to a neighboring battery cell 110 or settles in the vent 112 of a particularly vulnerable neighboring battery cell 110, the vent 112 of the neighboring battery cell 110 may be opened. Therefore, due to the event occurring in the specific battery cell 110, a problem may occur in which the event is propagated to the neighboring battery cell 110. The first heat shielding member 130 is formed outside the upper surface of the battery cell 110 where the vent 112 is formed, and the discharge material may be prevented or substantially prevented from directly contacting the battery cell 110 when the discharge material flies. In particular, the first heat shielding member 130 is formed on the outer surface to cover even the vent 112 of the battery cell 110, and the relatively more vulnerable vent 112 can be protected from the discharge material.

While blocking the heat of the scattered discharge material from being transferred to the battery cell 110, the first heat shielding member 130 may be opened along with the opening of the vent 112 when the vent 112 operates due to the internal pressure in the corresponding battery cell 110. Accordingly, the first heat shielding member 130 may protect the battery cell 110 from the discharge material but may not interfere with the operation of the vent 112. In an embodiment, the first heat shielding member 130 may be configured to include, for example, mica or aerogel.

The rigid member 140 may be formed on the upper surface of the first heat shielding member 130. The rigid member 140 may provide mechanical rigidity to the outer surface of the first heat shielding member 130. The rigid member 140 may prevent or substantially prevent the battery cell 110 from melting or rupturing. In addition, the rigid member 140 may transfer the heat generated in the battery cell 110 and dissipate the same to the outside of the battery pack 100.

In addition, in the rigid member 140, an opening hole 140a may be formed in an area corresponding to the vent 112 of the battery cell 110. Accordingly, the vent 112 may not be interfered by the opening hole 140a of the rigid member 140, and, thus, the operation of the vent 112 of the battery cell 110 may not be interrupted. In an embodiment, the rigid member 140 opens only an area corresponding to the vent 112 of the battery cell 110, and, thus, even when the vent 112 is opened, it is possible to prevent or substantially prevent the electrode assembly from escaping to the outside. Accordingly, the rigid member 140 can prevent or substantially prevent the electrode assembly in high temperature from being separated due to the occurrence of an event, thereby preventing or substantially preventing heat propagation.

In an embodiment, the rigid member 140 may include a metal plate 141 and an insulating member 142 around (e.g., surrounding) the metal plate 141.

The metal plate 141 may be made of a highly rigid metal, such as steel, stainless steel, or aluminium. The metal plate 141 may provide a desired rigidity to the rigid member 140 and may prevent or substantially prevent the battery cell 110 from melting or rupturing when an event occurs. In an embodiment, the metal plate 141 may have a roughly "U"-shaped cross-sectional configuration and may be elongated along the direction in which the battery cells 110 are arranged. Through the configuration of the metal plate 141, the metal plate 141 may additionally secure the rigidity with respect to the upper and lower portions thereof. In an embodiment, the metal plate 141 may have screw holes formed at the front and rear ends in the extended length direction, to be screwed to the upper cover 170.

The insulating member 142 may be formed around (e.g., surrounding) the outer circumference of the metal plate 141. In an embodiment, the insulating member 142 may be formed to extend further to the side of the metal plate 141. In an embodiment, the insulating member 142 may be formed of a plastic injection-molded article, and may be integrally formed with the metal plate 141 by insert injection. In an embodiment, the insulating member 142 may expose the front and rear ends of the metal plate 141, and, thus, the front and rear ends of the metal plate 141 may be coupled to the upper cover 170, respectively.

In an embodiment, the insulating member 142 may extend to both sides of the metal plate 141 to cover the entire upper surface of the battery cell 110. The insulating member 142 may provide a space between the upper surface of the battery cell 110 and the upper cover 170, thereby forming the second heat shielding member 160.

The insulating member 142 may be formed on both sides of the vent 112 of the battery cell 110 according to the "U" shape of the metal plate 141 at a center with respect to the width, and may include two rows of central steps 142a extending along the longitudinal direction, which is the direction in which the battery cells 110 are arranged, and two rows of edge steps 142b formed on both edges on the basis of the width and also extending along the longitudinal direction.

The central step 142a is formed by bending the metal plate 141 to surround the two ends protruding upward. Even though both ends of the metal plate 141 protrude upward, the metal plate 141 may not be exposed by the central step 142a.

In an embodiment, the edge step 142b may be formed separately from the metal plate 141, and may be formed to have a same height as the central step 142a. Two spaces may be formed between the central step 142a of the second row and the edge step 142b of the second row, and the second heat shielding member 160 may be located in each of the spaces. The central step 142a and the edge step 142b support the upper cover 170 together, and, thus, the upper cover 170 may be screwed to the metal plate 141.

In an embodiment, the insulating member 142 has an opening hole at a same position as the metal plate 141, and, thus, the opening hole 140a of the rigid member 140 may be formed. The first heat shielding member 130 may be exposed through the opening hole 140a of the rigid member 140. Accordingly, the rigid member 140 may not interfere with the operation of the first heat shielding member 130 and the vent 112 of the battery cell 110 located thereunder.

The receiving cover 150 may protect the battery cell 110 from external shock by surrounding the same. In an embodiment, the receiving cover 150 may include a support plate 151 formed on a lower portion of the battery cell 110, a side frame 152 formed along a side surface of the battery cell 110, and an end plate 153 coupled to front and rear ends where the battery cells 110 are arranged.

The support plate 151 may be formed along a surface, for example, a lower surface, where the plurality of battery cells 110 are arranged. The support plate 151 may be coupled to the battery cell 110, the first heat shielding member 130 coupled thereto, and the outer surface of rigid member 140, and can support loads applied therefrom. In an embodiment, the support plate 151 may also perform the function of a cooling plate and may dissipate the heat generated in the battery cell 110 through the lower surface of the battery pack 100.

The side frame 152 may be coupled to both sides of the battery cell 110 in the upper area of the support member 151. The side frame 152 may include two frames 152b and 152c formed at both ends along the direction in which the battery cells 110 are arranged.

The end plate 153 may be coupled to the front and rear ends where the battery cells 110 are arranged. The end plate 153 may be coupled to the support plate 151 and the side frame 152, and, thus, the battery cell 110 may be received in the internal space. In an embodiment, the end plate 153 may also be coupled to the upper cover 170, which is to be coupled to the upper portion of the battery cell, thereby entirely covering the exterior of the battery cell 110.

The second heat shielding plate 160 may be located on the upper surface of the rigid member 140. In an embodiment, the second heat shielding plate 160 includes two plates 161 and 162 spaced apart from each other and may be formed in spaces between two rows of central steps 142a and two rows of edge steps 142b formed on the insulating member 142 of the rigid member 140, respectively. However, the second heat shielding plate 160 may be positioned on the upper surface of the rigid member 140 in a state of being coupled to the lower surface of the upper cover 170. That is, the second heat shielding plate 160 may be in a state of being fixed to the lower surface of the upper cover 170 and may be positioned to correspond to the space formed between the central step 142a of the second row and the edge step 142b of the second row.

The second heat shielding plate 160 may also be formed to extend along the direction in which the battery cells 110 are arranged, together with the rigid member 140. In an embodiment, the second heat shielding plate 160 may include mica or aerogel. Like the first heat shielding plate 130, the second heat shielding plate 160 may protect the underlying structure from a discharge material when an event occurs in the battery cell 110. For example, although not separately shown, a bus bar may be coupled to the electrode terminal 111 of the battery cell 110, and the second heat shielding plate 160 may protect the bus bar from the discharge material.

The upper cover 170 may be located on the upper portion of the rigid member 140. In an embodiment, the upper cover 170 may be fastened to the receiving cover 150 configured thereunder, thereby entirely covering the battery cell 110. In addition, the second heat shielding member 160 may be coupled to the lower surface of the upper cover 170, and, accordingly, the second heat shielding member 160 may be located in the space formed between the central step 142a and the edge step 142b of the rigid member 140 adjacent to each other. The upper cover 170 may have opening holes 171 corresponding to the opening holes 140a of the rigid member 140.

As described above, in the battery pack 100 according to one or more embodiments of the present disclosure, the rigidity and heat dissipation function of the battery pack can be secured by forming the rigid member 140 on the surface of the battery cell 110 where a vent is formed, and neighboring battery cells 110 can be protected from the discharge material generated from the battery cell 110 in which an event has occurred by arranging the first heat shielding member 130 and the second heat shielding member 160 on the lower and upper surfaces of the rigid member 140, respectively.

Herein, an effect of the battery pack according to one or more embodiments of the present disclosure will be described in further detail.

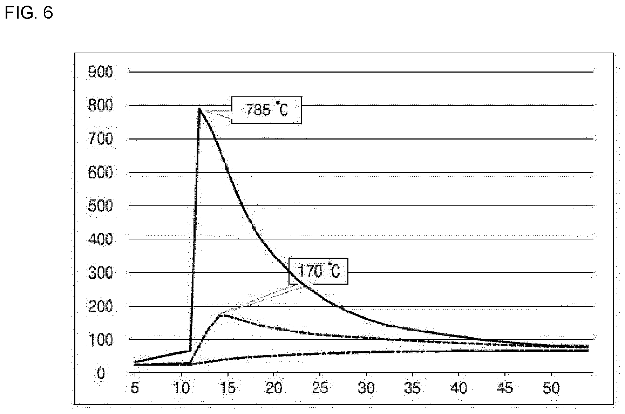

FIG. 6 is a graph showing a degree of heat propagation to neighboring cells when an event occurs in the battery pack according to an embodiment of the present disclosure.

Referring to FIG. 6, when an event occurs in a specific battery cell 110 at a specific time (about 10 minutes), thermal propagation to neighboring battery cells 110 can be confirmed. First, as confirmed by the graph indicated by a solid line, when an event occurs in the specific battery cell 110, it can be seen that the temperature of the battery cell 110 increases to about 785 °C. However, as confirmed from the graph indicated by a dotted line, it can be seen that the temperature of the neighboring battery cell 110 of the corresponding or specific battery cell 110 increases, but only rises to 170 °C and returns to normal. In addition, the remaining battery cells 110 that are not adjacent to the corresponding battery cell 110 may not be affected and maintain a normal state, as shown in the graph indicated by a double-dash line. Therefore, even if an event occurs in the specific battery cell 110, it can be seen that thermal propagation to neighboring battery cells 110 is minimized or reduced.

As described above, in the battery pack according to one or more embodiments of the present disclosure, the rigidity and heat dissipation function of the battery pack can be secured by forming a rigid member on a surface of the battery cell where a vent is formed, and neighboring battery cells can be protected from a discharge material generated from a battery cell in which an event has occurred by forming a first heat shielding member and a second heat shielding member on the lower and upper surfaces of the rigid member, respectively.

While some embodiments for carrying out the present disclosure have been described herein, the present disclosure is not limited to these embodiments, and it will be understood by a person skilled in the art that various changes in form and details may be made therein without departing from the scope of the present disclosure as set forth by the following claims.

## Claims

1. A battery pack comprising:
a plurality of battery cells;
a first heat shielding member arranged to cover a side of a battery cell of the plurality of battery cells where a vent is formed; and
a rigid member coupled to an outer surface of the first heat shielding member,
wherein the rigid member comprises a metal plate and an insulating member covering the metal plate.

2. The battery pack as claimed in claim 1, wherein the rigid member comprises at least one of steel, and aluminium.

3. The battery pack as claimed in claim 1 or claim 2, wherein the first heat shielding member comprises mica or aerogel.

4. The battery pack as claimed in any one of claims 1 to 3, wherein the insulating member is integrally formed to surround at least one side of the rigid member.

5. The battery pack as claimed in any one of claims 1 to 4, wherein the rigid member comprises a central step including protrusions protruding on a side opposite to a side facing the battery cell.

6. The battery pack as claimed in claim 5, wherein the central step is formed in two rows and extends along a direction in which the battery cells are arranged.

7. The battery pack as claimed in claim 5 or claim 6, wherein the central step is formed along a protrusion shape of the metal plate.

8. The battery pack as claimed in any one of claims 1 to 7, wherein the rigid member comprises an edge step including protrusions protruding on a side opposite to a side facing the battery cell with respect to both edge regions on the basis of a width of the battery cell.

9. The battery pack as claimed in claim 8, wherein the edge step has a same height as a central step formed at a center of the rigid member.

10. The battery pack as claimed in any one of claims 1 to 4, wherein the rigid member comprises a central step formed on both sides of the vent of the battery cell, and an edge step formed on both edges on the basis of a width of the battery cell, and the battery pack further comprises a second heat shielding member in an area between the central step and the edge step.

11. The battery pack as claimed in claim 10, wherein the second heat shielding member comprises mica or aerogel.

12. The battery pack as claimed in claim 1, wherein the rigid member comprises stainless steel.
